# EUROPÄISCHE PATENTANMELDUNG

(11) **EP 1 598 578 A2**
(43) Veröffentlichungstag der Anmeldung: **23.11.2005**
(21) Anmeldenummer: 05010698.8
(22) Anmeldetag: 18.05.2005
(51) Int. Cl.: F16H 63/30

(54) **Schaltschienenhalterung**

(30) Priorität: 19.05.2004 DE 102004024678
(71) Anmelder: ZF FRIEDRICHSHAFEN AG, 88038 Friedrichshafen (DE)
(72) Erfinder: Nitzschke, Rüdiger, 88085 Langenargen (DE); Ferenc, Mark, Budapest 1031 (HU)

(57) **Zusammenfassung**

Es wird eine Schaltschienenhalterung (1) für die Schaltschienen (2) eines Getriebes vorgeschlagen, die in ein bestehendes Getriebegehäuse anordbar ist, so dass unterschiedliche Anordnungen der Schaltschienen (2) in Abhängigkeit von der Getriebeausführung innerhalb einer Getriebebaureihe eine Gehäuseausführung benötigen.

## Beschreibung

Die vorliegende Erfindung betrifft eine Schaltschienenhalterung für die Schaltschienen eines Getriebes gemäß dem Oberbegriff des Patentanspruchs 1.

Nach dem Stand der Technik weisen unterschiedliche Ausführungen einer Getriebereihe unterschiedliche Gehäuse auf. Beispielsweise unterscheiden sich die Getriebegehäuse der 5-Gang- und der 6-Gang-Ausführung bei einer Getriebereihe, da die Schaltschienen im Gehäuse unterschiedlich angeordnet sind und somit unterschiedliche Lagerungseinrichtungen am Gehäuse benötigen.

Der vorliegenden Erfindung liegt die Aufgabe zugrunde, eine Einrichtung anzugeben, die es ermöglicht, für unterschiedliche Ausführungen einer Getriebereihe das gleiche Gehäuse zu verwenden.

Diese Aufgabe wird durch die Merkmale des Patentanspruchs 1 gelöst. Weitere erfindungsgemäße Ausgestaltungen und Vorteile gehen aus den Unteransprüchen hervor.

Demnach wird vorgeschlagen, in einem Getriebegehäuse eine separate Halterung für die Schaltschienen des Getriebes anzuordnen, so dass unterschiedliche Anordnungen der Schaltschienen eine Gehäuseausführung benötigen.

Durch die erfindungsgemäße Konzeption wird die Anzahl der benötigten Bauteile in vorteilhafter Weise reduziert; pro Getriebebaureihe wird mindestens ein Druckgusswerkzeug eingespart.

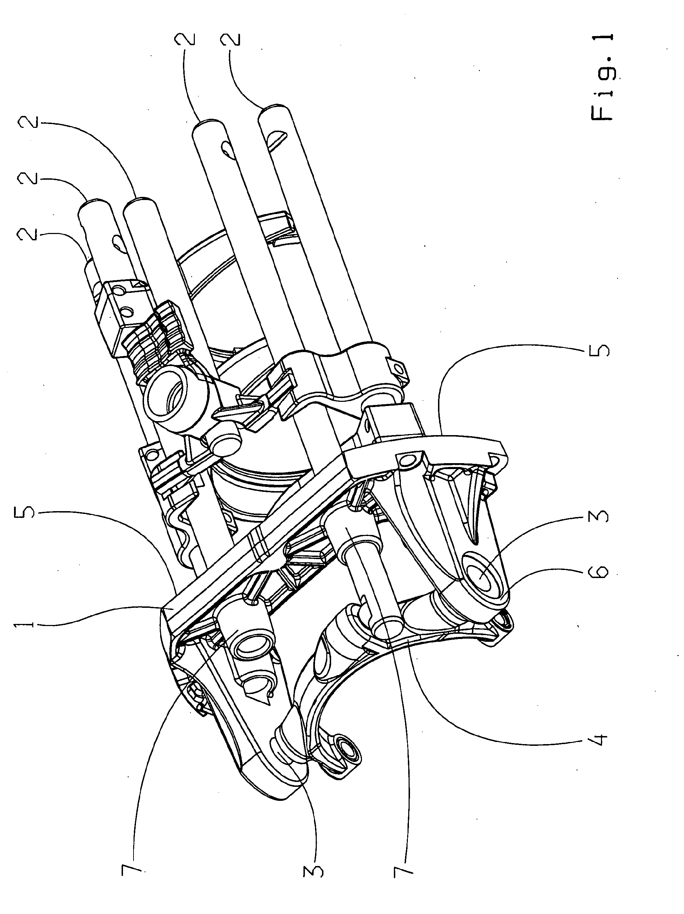

Die Erfindung wir im Folgenden anhand der beigefügten Figur beispielhaft näher erläutert.

In der Figur ist eine bevorzugte Ausführungsform der erfindungsgemäßen Schaltschienenhalterung perspektivisch dargestellt. Die separate Halterung ist mit dem Bezugszeichen 1 versehen. Sie ist in das vordere Getriebegehäuse anordbar und kann über die Flächen 5 zentriert und positioniert werden, wobei die Befestigung am Gehäuse vorzugsweise mittels Schrauben erfolgt. Die Halterung 1 dient einerseits als Lagerung für die Schaltschienen 2 und andererseits als Lagerung der Schaltschwinge 4; zur Lagerung der Schaltschwinge 4 sind Bolzen 3 vorgesehen, welche in entsprechenden Aufnahmen 6 in der Halterung 1 gelagert sind. Wie aus der Figur ersichtlich, umfasst die Halterung 1 Aufnahmen bzw. Lagerungen 7 für die Schaltschienen 2.

Durch die erfindungsgemäße Halterung kann mit geringem Herstellungsaufwand ein identisches Gehäuse für unterschiedliche Getriebeausführungen innerhalb einer Getriebereihe verwendet werden.

### Bezugszeichen

- 1: Halterung
- 2: Schaltschiene
- 3: Bolzen
- 4: Schaltschwinge
- 5: Kontaktfläche zum Getriebegehäuse
- 6: Aufnahme
- 7: Lagerung

## Patentansprüche

1. Schaltschienenhalterung (1) für die Schaltschienen (2) eines Getriebes, **dadurch gekennzeichnet , dass** sie in ein bestehendes Getriebegehäuse anordbar ist, so dass unterschiedliche Anordnungen der Schaltschienen (2) in Abhängigkeit von der Getriebeausführung innerhalb einer Getriebebaureihe eine Gehäuseausführung benötigen.

2. Schaltschienenhalterung (1) nach Anspruch 1, **dadurch** gekenn- zeichnet, dass sie im Getriebegehäuse über Flächen (5) zentrierbar und positionierbar ist, wobei die Befestigung der Halterung (1) am Gehäuse vorzugsweise mittels Schrauben erfolgt.

3. Schaltschienenhalterung (1) nach Anspruch 1 oder 2, **dadurch ge- kennzeichnet**, dass sie einerseits als Lagerung für die Schaltschienen (2) und andererseits als Lagerung der Schaltschwinge (4) dient.

4. Schaltschienenhalterung (1) nach Anspruch 3, **dadurch** gekenn- zeichnet, dass zur Lagerung der Schaltschwinge (4) Bolzen (3) vorgesehen sind, welche in entsprechenden Aufnahmen (6) in der Halterung (1) gelagert sind.

5. Schaltschienenhalterung (1) nach Anspruch 3 oder 4, **dadurch ge- kennzeichnet,** dass sie Aufnahmen bzw. Lagerungen (7) für die Schaltschienen (2) des Getriebes aufweist.
